# EUROPÄISCHE PATENTSCHRIFT

(11) **EP 3 898 462 B1**
(45) Veröffentlichungstag und Bekanntmachung des Hinweises auf die Patenterteilung: **28.01.2026**
(21) Anmeldenummer: 19836566.0
(22) Anmeldetag: 18.12.2019
(51) Int. Cl.: B65G 17/34, B65G 47/52, B65G 47/96

(54) **QUERFÖRDERSORTER MIT ABRÄUMVORRICHTUNG UND VERFAHREN ZUM ENTFERNEN VON AUF EINEM QUERFÖRDERSORTER DEPLATZIERTEM STÜCKGUT**
TRANVERSAL SORTER WITH A REMOVAL APPARATUS AND METHOD FOR REMOVING GOODS MISPLACED ON A TRANSVERSAL SORTER
TRIEUR TRANSVERSAL COMPRENANT UN DISPOSITIF D'ENLÈVEMENT ET PROCÉDÉ POUR ÉLOIGNER DES MARCHANDISES MAL POSITIONNÉES SUR UN TRIEUR TRANSVERSAL

(30) Priorität: 21.12.2018 DE 102018009974
(43) Veröffentlichungstag der Anmeldung: 27.10.2021
(73) Patentinhaber: Christen, Hansueli, 5079 Zeihen (CH)
(72) Erfinder: Christen, Hansueli, 5079 Zeihen (CH)
(74) Vertreter: Straubel, Dirk
(86) Internationale Anmeldenummer: PCT/IB2019/061040
(87) Internationale Veröffentlichungsnummer: WO 2020/128917

(56) Entgegenhaltungen:
- EP-A1- 0 029 614
- EP-A1- 3 566 982
- DE-A1- 102014 206 016
- US-A1- 2009 272 624

## Beschreibung

Die Erfindung betrifft einen Querfördersorter mit einer Abräumvorrichtung zum Entfernen von deplatziertem Stückgut gemäß den im Oberbegriff des Anspruchs 1 stehenden Merkmalen.

Ein Querfördersorter kann insbesondere ein Quergurtsorter oder ein Kippschalensorter sein. Ein Quergurtsorter ist beispielsweise in der DE 10 2007 040 859 A1 beschrieben und stellt ein Fördersystem für Stückgut dar, dessen Querfördereinrichtung mehrere rechtwinklig zur Förderrichtung angebrachte kurze Gurtförderer umfasst, die auf einem Fahrwagen montiert sind. Mehrere Fahrwagen sind gelenkig miteinander verbunden und der so entstehende Endloszug wird formschlüssig, reibschlüssig oder aber durch einen Linearmotor angetrieben. Das Stückgut wird beim Ein- und Ausschleusen durch Bewegung des Gurtförderers aufgenommen bzw. ausgegeben. Die DE 10 2007 040 859 A1 offenbart einen Querfördersorter gemäß dem Oberbegriff des Anspruchs 1.

Prinzipiell ist der Kippschalensorter vergleichbar mit dem Quergurtsorter, da er ebenfalls aus einzelnen Fahrwagen besteht, die sich auf einem in sich geschlossenen rollengeführten Schienenparcours befinden. Die Querfördereinrichtung umfasst jedoch auf den einzelnen Fahrwagen anstelle eines Quergurtes eine kippbare Schale, die sich zunächst in waagerechter Position befindet und bei Erreichen der vorgesehenen Endstelle durch Kippen das Stückgut ausschleust.

Im Betrieb kommt es immer wieder vor, dass Stückgut auf oder zwischen den oder die Fahrwagen gelangt und in dieser Position nicht von der Querfördereinrichtung erfasst wird. Es kann dann versucht werden, dieses deplatzierte Stückgut durch Betrieb der auf den beiden benachbarten Fahrwagen angeordneten Querfördereinrichtung abzuwerfen. Nach mehreren erfolglosen Versuchen wird der betroffene Fahrwagen oder mithin beide benachbarte Fahrwagen für die weitere Verteilung von Stückgut gesperrt und steht/stehen dann nicht mehr zur Verfügung. Während eines Schichttages können bis zu einige hundert Stückgute deplatziert abgelegt sein, wodurch zunächst eine signifikante Leistungseinbuße des Querfördersorters resultiert. In einer Wartungsschicht muss dann deplatziertes Stückgut manuell aus dem Querfördersorter entfernt werden, da dies am mit einer Geschwindigkeit von 2,5 m/s fahrenden Querfördersorter aus Gründen der Arbeitssicherheit nicht möglich ist. Diese Tätigkeit kann nur während einer Wartungsschicht bei einem in Wartungsgeschwindigkeit mit ca. 0,2 m/s laufenden Querfördersorter durchgeführt werden und ist daher sehr zeitaufwändig.

Die EP 3 566 982 A1 offenbart einen Querfördersorter mit einer Abräumvorrichtung, deren Stützelement das deplatzierte Stückgut in Förderrichtung begleitet und mittels eines quer zur Förderrichtung ausfahrenden Stoßelementes von seiner deplatzierten Lage herunterstößt. Das Stoßelement kann außerdem eine Luftaustrittsdüse aufweisen, über welche ein Luftstoß abgegeben wird, um die Stoßbewegung des Stoßelementes zu unterstützen.

Mechanische Lösungen zum Entfernen deplatzierten Stückgutes im laufenden Betrieb haben sich bisher nicht durchsetzen können, da Hersteller von Querfördersortern als auch die Betreiber dieser Anlagen befürchten, dass sich mechanische Vorrichtungen zum Abräumen des deplatzierten Stückgutes in dem Querfördersorter verklemmen, diesen erheblich beschädigen und über einen längeren Zeitraum stilllegen könnten.

Der Erfindung lag daher die Aufgabe zugrunde, einen Querfördersorter bereitzustellen, dessen Abräumvorrichtung ein risikofreies Entfernen von deplatziert liegendem Stückgut im laufenden Betrieb ermöglicht.

Die Aufgabe wird erfindungsgemäß mit den Merkmalen des Anspruchs 1 gelöst. Die Abblasevorrichtung ermöglicht ein Entfernen von deplatziertem Stückgut im laufenden Betrieb, so dass die Anzahl belegter oder als fehlerhaft identifizierter Fahrwagen minimiert wird und alle im Umlauf befindlichen Fahrwagen für eine Verteilung von Stückgut zur Verfügung stehen. Aufgrund ihrer Position unmittelbar neben der Förderbahn und den darauf geführten Fahrwagen erfolgt eine Kraftübertragung auf das zu entfernende, deplatzierte Stückgut ausschließlich mittels der von der Abblasevorrichtung abgegebenen Luftströmung, so dass auch temporär keine kollisionsgefährdenden Bauteile an oder zwischen die Fahrwagen herangeführt zu werden brauchen. Die von der Abblasevorrichtung abgegebene Luftströmung muss hinsichtlich ihres Volumenstromes und ihrer Strömungsgeschwindigkeit derart dimensioniert sein, dass eine reibschlüssige Verbindung des deplatziert liegenden Stückgutes überwunden wird.

Das deplatzierte Stückgut kann insbesondere auf einem Fahrwagenbauteil des Fahrwagens abgelegt sein und die Abblasevorrichtung mindestens eine auf oder über einem vertikalen Niveau des Fahrwagenbauteils ortsfest angeordnete Luftaustrittsöffnung aufweisen. Die Fahrwagen mit ihren darauf angeordneten Querfördereinrichtungen bewegen sich somit an der feststehenden Abblasevorrichtung und der oder den ortsfest an der Abblasevorrichtung angeordneten Luftaustrittsöffnung(en) vorbei. Der wesentliche Vorteil dieser Anordnung liegt darin begründet, dass insbesondere bei der Zuführung des bewegten Luftstromes keine beweglichen Teile nachgeführt zu werden brauchen.

Vorzugsweise ist der Querfördersorter ein Quergurtsorter, dessen Fahrwagenbauteil eine Abdeckschürze ist, die einen Abstand zwischen benachbarten Fahrwagen überspannt. Der Quergurtsorter weist als Querfördereinrichtung einen quer zur Transportrichtung des Querfördersorters verlaufenden Fördergurt auf. Bei der Abdeckschürze handelt es sich um ein flexibles oder flexibel befestigtes Bauelement, das permanent den Abstand zwischen den Fahrwagen überspannt und eine Relativbewegung zwischen diesen zulässt. Zudem weist die Abdeckschürze eine Festigkeit auf, die den Transport eines darauf liegenden, deplatzierten Stückgutes bis zu der Abblasevorrichtung ermöglicht. Die mindestens eine Luftaustrittsöffnung sollte derart angeordnet sein, dass die daraus abgegebene Luftströmung über die Abdeckschürze streicht und dort deplatziert liegendes Stückgut mitreißt. Hierfür kommt insbesondere ein Abströmen der Luft aus der oder den Luftaustrittsöffnung(en) auf Höhe der Abdeckschürze parallel zu dieser oder aus einer Position der Luftaustrittsöffnung(en) über der Abdeckschürze unter einem geneigten Winkel von oben infrage.

Der Querfördersorter kann alternativ zu der vorstehend beschriebenen Bauform auch ein Kippschalensorter sein. Ein Kippschalensorter weist als Querfördereinrichtung eine quer zur Transportrichtung des Querfördersorters beweglich gelagerte Kippschale auf. Ein Fahrwerk des Kippschalensorters, mit welchem der Fahrwagen auf einer Förderbahn abgestützt ist, ist meistens mittels einer Abdeckplatte von oben abdeckt. Die Kippschale ist von einem Kippschalenarm gehalten, welcher nach oben bezüglich der Abdeckplatte vorsteht. Ein Abstand zwischen benachbarten Fahrwagen ist mittels eines Faltenbalges überbrückt, um zu verhindern, dass Stückgut zwischen die Fahrwagen fällt.

Bei einem Kippschalensorter ist das Fahrwagenbauteil regelmäßig die Abdeckplatte, welche unter der beweglich gelagerten Kippschale angeordnet ist, und/oder das Fahrwerk des jeweiligen Fahrwagens und/oder der Faltenbalg, der einen Abstand zwischen benachbarten Fahrwagen überspannt. Auf der Abdeckplatte liegengebliebenes Stückgut mit großer Höhe blockiert häufig eine Kippbewegung der Kippschale während des Entladevorgangs. Gleiches gilt für auf dem Faltenbalg liegendes Stückgut, welches mitunter in den Bewegungsraum der Kippschale hineinragt. Im Fahrwerk festhängendes Stückgut könnte zerstört werden oder durch Verklemmen Schaden an dem Kippschalensorter verursachen. Die mindestens eine Luftaustrittsöffnung der Abblasevorrichtung sollte derart angeordnet sein, dass die daraus abgegebene Luftströmung über die Abdeckplatte und/oder das Fahrwerk und/oder den Faltenbalg streicht und dort deplatziert liegendes Stückgut mitreißt.

Zweckmäßigerweise sind mehrere Luftaustrittsöffnungen in Transportrichtung hintereinander angeordnet. Aufgrund der verhältnismäßig großen Transportgeschwindigkeit des Querfördersorters in Bereichen von über 2 m/s wäre die Verweildauer des deplatzierten Stückgutes vor einer einzigen Luftaustrittsöffnung unter Umständen für ein vollständiges Entfernen von dem Fahrwagenbauteil zu gering. Dieses Problem wäre beispielsweise auch durch eine abschnittsweise in Transportrichtung mitfahrende Luftaustrittsöffnung oder eine in Transportrichtung schlitzförmige Luftaustrittsöffnung lösbar. Die erstgenannte Lösung bedingt jedoch eine Vielzahl beweglicher Teile sowohl im Bereich der Luftaustrittsöffnung als auch im Bereich der Luftzuführung und die zweitgenannte Lösung führt zu einer linienartigen Überströmung des Querfördersorters, durch die möglicherweise auch korrekt auf ihrer Querfördereinrichtung liegendes Stückgut unkontrolliert abgeblasen werden könnte. Darüber hinaus wäre bei einer schlitzartigen Luftaustrittsöffnung auch eine verhältnismäßig große Luftmenge für das Abblasen des Stückgutes bereitzustellen.

Gemäß einer ersten vorteilhaften Ausführungsform sind die mehreren Luftaustrittsöffnungen gleichzeitig aktiviert. Unter einer aktivierten Luftaustrittsöffnung wird die Abgabe einer Luftströmung aus dieser verstanden. Bei einem Vorbeifahren des deplatzierten Stückgutes an den aktivierten Luftaustrittsöffnungen erhält das deplatzierte Stückgut quer zu seiner Transportrichtung immer wieder einen Impuls durch die aus der jeweils nächstliegenden Luftaustrittsöffnung austretenden Luftströmung, wodurch ein besonders effektiver seitlicher Versatz des deplatzierten Stückgutes bis zum Verlassen des Fahrwagenbauteils resultiert.

Alternativ ist es auch möglich, dass in Transportrichtung nacheinander eine einzelne der mehreren Luftaustrittsöffnungen aktiviert ist. Hierdurch lässt sich gezielt deplatziertes Stückgut anblasen und das notwendige Luftvolumen reduzieren. Sinnvollerweise ist ein Aktivieren der jeweiligen einzelnen Luftaustrittsöffnung von einer Fördergeschwindigkeit des Querfördersorters in Transportrichtung abhängig. Bei dieser Ausführungsform wechselt die aktive Luftaustrittsöffnung zur benachbarten Luftaustrittsöffnung innerhalb eines Zeitintervalls, in welchem das deplatzierte Stückgut mit Transportgeschwindigkeit bis zu der benachbarten Luftaustrittsöffnung mittels des Querfördersorters transportiert ist. Die jeweils aktive Luftaustrittsöffnung läuft mit dem deplatzierten Stückgut mit. Es ist immer die Luftaustrittsöffnung aktiviert, in deren Luftaustrittsbereich sich das deplatzierte Stückgut gerade befindet.

Es hat sich als besonders günstig herausgestellt, wenn auf einer der ersten Seite gegenüberliegenden, zweiten Seite neben der Förderbahn ein Sammeltisch angeordnet ist. Der Sammeltisch dient als Ablage für das von der Abblasevorrichtung abgeblasene, deplatzierte Stückgut. Der Sammeltisch kann auch als Paketrutsche oder Endstelle ausgebildet sein und hierfür einen geneigten Abschnitt aufweisen, der für einen Abtransport des Stückgutes von dem Querfördersorter dient.

Vorzugsweise ist der Sammeltisch auf oder unter einem vertikalen Niveau des Fahrwagenbauteils angeordnet, so dass von der Abblasevorrichtung abgeblasenes Stückgut barrierefrei auf den Sammeltisch gelangt.

Zweckmäßigerweise ist auf einer der ersten Seite gegenüberliegenden, zweiten Seite neben der Förderbahn eine zweite Abblasevorrichtung angeordnet. Diese zweite Abblasevorrichtung kann sich dann in Transportrichtung des Querfördersorters versetzt zu der Abblasevorrichtung befinden und ist insbesondere bei Kippschalensortern von Vorteil. Bei diesen kann es vorkommen, dass Stückgut bei Betätigung der Abblasevorrichtung beispielsweise auf der Abdeckplatte liegen bleibt und sich am Kippschalenarm abstützt. Beispielsweise nach einem weiteren Umlauf kann dann die zweite Abblasevorrichtung auslösen und von der gegenüberliegenden Seite gegen das Stückgut blasen, welches infolgedessen von der Abdeckplatte rutscht. Sofern eine zweite Abblasevorrichtung zum Einsatz kommt, sollte auf der gegenüberliegenden Seite der Förderbahn ebenfalls ein zweiter Sammeltisch angeordnet sein.

Die Abblasevorrichtung(en) kann/können an ein Gebläse oder an einen Kompressor angeschlossen sein. Ein Gebläse ist eine fremd angetriebene Strömungsmaschine, die meist mittels eines in einem Gehäuse rotierenden Laufrads ein gasförmiges Dispersionsmedium, in diesem Fall Luft, fördert sowie dabei zwischen Ansaug- und Druckseite
ein Druckverhältnis zwischen 1 und 1,3 erzielt. Strömungsmaschinen, die ein Druckverhältnis größer 1,3 erreichen, heißen Verdichter oder Kompressor. Die Wahl eines Gebläses oder Kompressors hängt insbesondere von der zur erwartenden Masse und dem zu erwartenden Volumen des mit dem Querfördersorter zu verteilenden Stückguts ab.

Vorteilhafterweise ist in Transportrichtung vor der Abblasevorrichtung eine Sensoreinheit derart angeordnet, dass diese den Abstand zwischen den benachbarten Fahrwagen und ein auf dem Fahrwagenbauteil befindliches, deplatziertes Stückgut identifiziert. Hierdurch kann die energetische Effizienz weiter verbessert werden, da die Abblasevorrichtung nur dann in Betrieb gesetzt ist, wenn zuvor ein auf dem Fahrwagenbauteil liegendes Stückgut von der Sensoreinheit erkannt worden ist. Darüber hinaus wird durch eine von der Sensoreinheit initiierte temporäre Inbetriebnahme der Abblasevorrichtung das Risiko vermindert, an der Abblasevorrichtung vorbeifahrendes, korrekt platziertes Stückgut ebenfalls abzublasen.

Günstigerweise ist/sind die Abblasevorrichtung(en) in Transportrichtung hinter den Entladestellen angeordnet. Diese Anordnung trägt dazu bei, das Risiko zu minimieren, ein korrekt auf der Querfördereinrichtung liegendes Stückgut versehentlich abzublasen. Wenn alle Entladestellen vor der Abblasevorrichtung liegen, ist das korrekt platzierte Stückgut bereits an der vorgesehenen Entladestelle abgeworfen und gelangt nicht mehr vor die Abblasevorrichtung, so dass prinzipiell sogar auf die Sensoreinheit verzichtet werden kann.

Zum besseren Verständnis wird die Erfindung nachfolgend anhand von vier Figuren erläutert. Es zeigen die
- **Fig. 1:**: eine Draufsicht auf einen Querfördersorter als Quergurtsorter mit Abblasevorrichtung;
- **Fig. 2:**: eine Seitenansicht auf den in Fig. 1 gezeigten Quergurtsorter mit Abblasevorrichtung;
- **Fig. 3:**: eine Seitenansicht auf einen Querfördersorter als Kippschalensorter mit Abblasevorrichtung und
- **Fig. 4:**: eine Draufsicht auf den in Fig. 3 gezeigten Kippschalensorter mit gegenüberliegenden Abblasevorrichtungen.

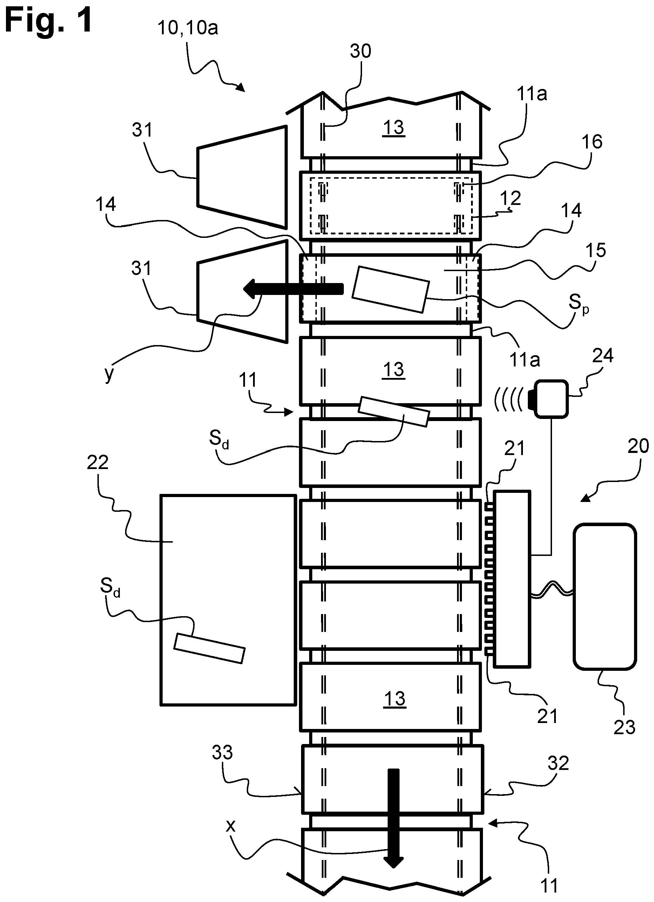

Die Fig. 1 zeigt in einer Draufsicht einen Ausschnitt eines Querfördersorters 10 in Form eines Quergurtsorters 10a, dessen Fahrwagen 12 mechanisch aneinander zu einer umlaufenden Kette gekuppelt und auf einer Förderbahn 30 zwangsgeführt sind. Die mechanische Verbindung zwischen benachbarten Fahrwagen 12 lässt eine Relativbewegung der beteiligten Fahrwagen 12 insbesondere bei Kurvenfahrten zu. Die Fahrwagen 12 weisen jeweils Räder 16 auf, die auf der Förderbahn 30 abrollen. Bei laufendem Querfördersorter 10 bewegen sich alle Fahrwagen 12 synchron in einer Transportrichtung x.

Jeder Fahrwagen 12 ist mit einer Querfördereinrichtung 13 versehen, die im dargestellten Ausführungsbeispiel einen über Umlenkrollen 14 laufenden Fördergurt 15 aufweist. Während der Beladung des Querfördersorters 10 gelangt korrekt platziertes Stückgut Sₚ auf die jeweilige Querfördereinrichtung 13 und bleibt darauf bis zum Erreichen einer dafür vorgesehenen Entladestelle 31 liegen. Sobald diese erreicht ist, wird die Querfördereinrichtung 13 in Betrieb gesetzt und das darauf korrekt platzierte Stückgut Sₚ in Ausschleuserichtung y abgeworfen. Die Ausschleuserichtung y steht rechtwinklig und in einer Ebene zu der Transportrichtung x. Bei einem fehlerfreien Einschleusen und Ausschleusen liegt korrekt platziertes Stückgut Sₚ ausschließlich auf der Querfördereinrichtung 13 eines Fahrwagens 12.

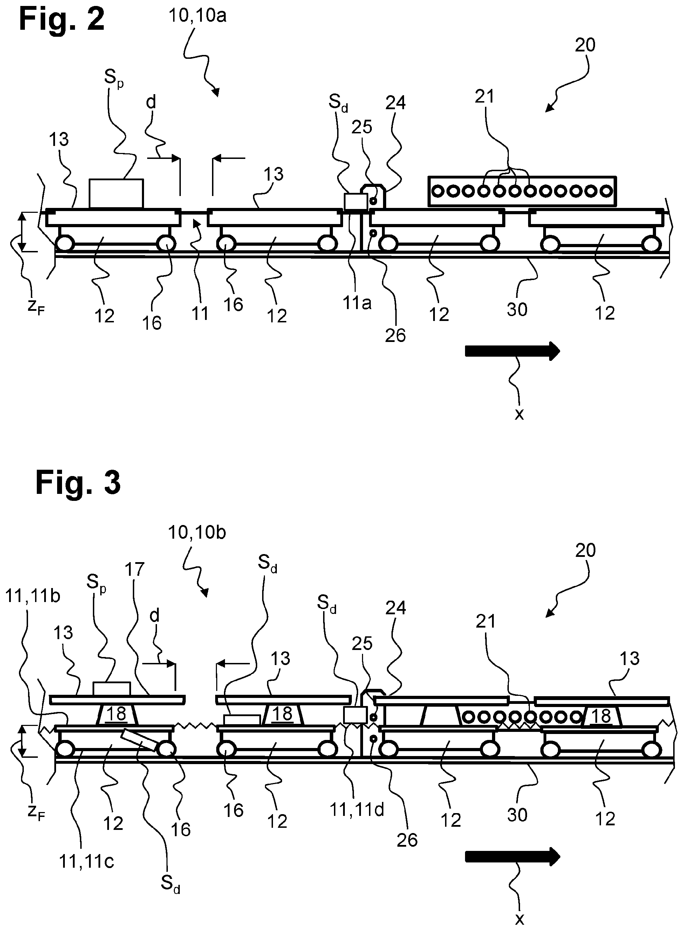

Zwischen benachbarten Fahrwagen 12 des Quergurtsorters 10a beziehungsweise zwischen den darauf befindlichen Querfördereinrichtungen 13 ist ein Abstand d (siehe Fig. 2) vorhanden, der für eine Relativbewegung der Fahrwagen 12 zueinander notwendig und mittels einer Abdeckschürze 11a abgedeckt ist. Die Abdeckschürze 11a verhindert, dass deplatziertes Stückgut S_{d} in Transportrichtung x zwischen die Querfördereinrichtungen 13 benachbarter Fahrwagen 12 gelangt, von dort zwischen die Fahrwagen 12 oder auf die Förderbahn 30 fällt und dort zerstört wird. Bei der Abdeckschürze 11a handelt es sich um ein Fahrwagenbauteil 11 des Quergurtsorters 10a, auf dem typischerweise deplatziertes Stückgut S_{d} liegen bleibt.

Das auf der Abdeckschürze 11a liegende, deplatzierte Stückgut S_{d} erfasst häufig keine der Querfördereinrichtungen 13, weder die des voreilenden noch die des nacheilenden Fahrwagens 12, so dass das deplatzierte Stückgut S_{d} zunächst weiterhin auf der Abdeckschürze 11a verbleibt und nicht an der vorgesehenen Entladestelle 31 oder irgendeiner anderen Entladestelle 31 abgeworfen werden kann. Nach mehreren Umläufen würde der Querfördersorter 10 die in Transportrichtung x vor und hinter dem deplatzierten Stückgut S_{d} befindliche Querfördereinrichtung 13 sperren, so dass diese dann bis zur nächsten Wartungsschicht nicht mehr zur Verfügung stünden.

Auf einer Abdeckschürze 11a deplatziertes Stückgut S_{d} passiert eine Sensoreinheit 24, welche sowohl das Vorhandensein des davor befindlichen Abstandes d zwischen den Fahrwagen 12 als auch das Vorhandensein des auf der Abdeckschürze deplatzierten Stückgutes S_{d} erfasst. Hierdurch wird vermieden, dass möglicherweise korrekt auf der Querfördereinrichtung 13 platziertes Stückgut Sₚ von der nachfolgend beschriebenen Abblasevorrichtung 20 entfernt wird.

Die Sensoreinheit 24 ist an die auf einer ersten Seite 32 neben der Förderbahn 30 angeordnete Abblasevorrichtung 20 angeschlossen. In dem Ausführungsbeispiel entsprechend Fig. 1 steht die Sensoreinheit 24 auf derselben ersten Seite 32 wie die Abblasevorrichtung 20. Im Falle eines deplatzierten Stückgutes S_{d} setzt die Sensoreinheit 24 die Abblasevorrichtung 20 in Betrieb, wodurch aus einer oder mehreren auf der dem Querfördersorter 10 zugewandten Seite der Abblasevorrichtung 20 ausgebildeten Luftaustrittsöffnung(en) 21 ein Luftstrom austritt, welcher das deplatzierte Stückgut S_{d} von der Abdeckschürze 11a hinabbläst.

Die Abblasevorrichtung 20 ist an ein rückwärtig angeordnetes Gebläse oder einen Kompressor 23 angeschlossen. Bevorzugterweise hält dieses/dieser permanent ein Druckgefälle aufrecht und die Luftaustrittsöffnungen 21 sind vorzugsweise mit elektromechanischen Ventilen angesteuert, so dass auch bei einem schnelllaufenden Querfördersorter 10 durch eine verzögerungsfreie Bereitstellung eines Luftstromes aus der/den Luftaustrittsöffnung(en) 21 das abzublasende, deplatzierte Stückgut S_{d} erfasst wird. Zur Minimierung des für das Abblasen des deplatzierten Stückgutes S_{d} notwendigen Luftvolumenstroms geben die mehreren Luftaustrittsöffnungen 21 in Transportrichtung x nacheinander, wechselnd entsprechend der Geschwindigkeit des Querfördersorters 10, einen Luftstrom ab. Es ist somit jeweils die Luftaustrittsöffnung 21 aktiv, auf deren Höhe in Transportrichtung x sich das deplatzierte Stückgut S_{d} gerade befindet. Jede der beteiligten Luftaustrittsöffnungen 21 bläst das deplatzierte Stückgut S_{d} abschnittsweise in Ausschleuserichtung y weiter.

Das auf diese Weise kontaktlos von der Abdeckschürze 11a abgeblasene, deplatzierte Stückgut S_{d} gelangt auf einen an einer zweiten Seite 33 neben der Förderbahn 30 ortsfest stehenden Sammeltisch 22 und verbleibt dort bis zu einer manuellen Entfernung, die je nach Anfall deplatzierten Stückgutes S_{d} auch während des laufenden Betriebes des Querfördersorters 10 erfolgen kann. Der Sammeltisch 22 befindet sich stets auf der bezüglich der Abblasevorrichtung 20 anderen Seite der Förderbahn 30, damit deplatziertes Stückgut S_{d} aufgrund der blasenden Wirkung der aus den Luftaustrittsöffnungen 21 ausströmenden Luft mitgenommen und in Strömungsrichtung von der Querfördereinrichtung 13 abtransportiert wird.

Die Fig. 2 zeigt die an dem Querfördersorter 10 angeordnete Abblasevorrichtung 20 in einer Seitenansicht, wobei die Fahrwagen 12 mit ihren jeweils darauf ausgebildeten Querfördereinrichtungen 13 entsprechend der Transportrichtung x an der ortsfest neben der Förderbahn 30 stehenden Abblasevorrichtung 20 vorbeifahren.

Ein korrekt platziertes Stückgut Sₚ könnte noch vor Erreichen der Abblasevorrichtung 20 mittels der darunter befindlichen Querfördereinrichtung 13 an einer dafür vorgesehenen aber aus Gründen der Übersichtlichkeit weggelassenen Entladestelle 31 abgeladen werden. Es wäre ebenfalls möglich, die Entladestelle 31 auch in Transportrichtung x hinter der Abblasevorrichtung 20 anzuordnen, da die Abblasevorrichtung 20 lediglich auf der Abdeckschürze 11a liegendes, deplatziertes Stückgut S_{d} entfernt.

Die Identifikation eines deplatzierten Stückgutes S_{d} erfolgt mittels der Sensoreinheit 24, die einen Stückgutsensor 25 und einen Fahrwagensensor 26 umfasst. Der Stückgutsensor 25 dient dazu, ein Stückgut Sₚ, S_{d} qualitativ zu erfassen. Der Fahrwagensensor 26 misst den Abstand d zwischen zwei Fahrwagen 12. Sofern zum selben Zeitpunkt der Fahrwagensensor 26 ein Abstand d und der Stückgutsensor 25 ein Stückgut Sₚ, S_{d} erkennt, muss es sich um ein auf der Abdeckschürze 11a liegendes, deplatziertes Stückgut S_{d} handeln. Durch Emittieren einer aus den Luftaustrittsöffnungen 21 entweichenden Luftströmung erfolgt dann ein kontaktloses Entfernen des deplatzierten Stückgutes S_{d} von der Abdeckschürze 11a. Der Stückgutsensor 25 ist in vertikaler Richtung über dem Fahrwagensensor 26 angeordnet und befindet sich vorzugsweise auf oder über einem vertikalen Niveau z_{F} der Abdeckschürze 11a.

Der in Fig. 1 zu erkennende Sammeltisch 22 sollte mit seiner Oberseite auf oder unter dem vertikalen Niveau z_{F} der Abdeckschürze 11a platziert sein. Hierdurch kann das von der Abblasevorrichtung 20 hinuntergeblasene, deplatzierte Stückgut S_{d} barrierefrei auf den Sammeltisch 22 rutschen und dort liegenbleiben.

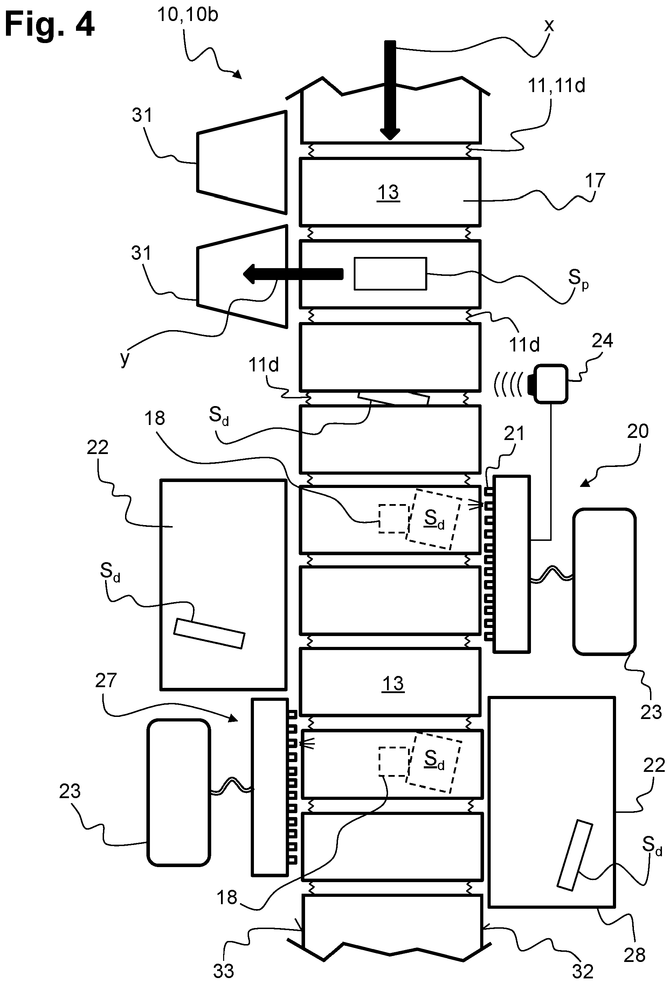

Die Fig. 3 und Fig. 4 zeigen einen Querfördersorter 10 als Kippschalensorter 10b. Jeder Fahrwagen 12 weist ein Fahrwerk 11c mit daran gelagerten Rädern 16 auf, mit Hilfe derer der Fahrwagen 12 auf einer Förderbahn 30 in Transportrichtung x zwangsgeführt ist. Das Fahrwerk 16 ist mittels einer Abdeckplatte 11b überspannt, wobei die Abdeckplatte 11b sowohl die Räder 16 als auch nicht weiter gezeigte Teile des Fahrwerks 16c abdeckt und somit ein Eindringen von deplatziertem Stückgut S_{d} unter ein Niveau der Abdeckplatte 11b meistens verhindert.

Auf der Abdeckplatte 11b ist ein nach oben ragender Kippschalenarm 18 angeordnet, an dessen freien Ende eine Kippschale 17 schwenkbar befestigt ist. Die Kippschale 17 schwenkt zum Entladen um eine in der Transportrichtung x ausgerichtete Schwenkachse, so dass durch Einleitung einer Kippbewegung ein darauf befindliches, korrekt platziertes Stückgut Sₚ an der dafür vorgesehenen Entladestelle 31 abgleitet.

Trotz des Vorhandenseins der Abdeckplatte 11b kommt es immer wieder vor, dass deplatziertes Stückgut S_{d} in das Fahrwerk 11c gerät, wie in dem in der Bildebene der Fig. 3 ganz linken Fahrwagen 12 angedeutet ist.

Zwischen den Fahrwagen 12 ist jeweils ein Faltenbalg 11d vorgesehen, der den Abstand d zwischen den Fahrwagen 12 überbrückt und gleichzeitig eine Artikulation der Fahrwagen 12 zueinander erlaubt. Deplatziertes Stückgut S_{d} kann beispielsweise auf dem Faltenbalg 11d liegen und sich bei Betätigung der Kippschale 17 nicht mehr entfernen lassen.

Besonders problematisch ist im laufenden Betrieb jedoch auf der Abdeckplatte 11b liegendes, deplatziertes Stückgut S_{d}, da hierdurch häufig die Funktion der Kippschale 17 eingeschränkt ist. Insbesondere bei hoch aufragendem, deplatzierten Stückgut S_{d} stößt die Kippschale 17 mit ihrer Unterseite an das deplatzierte Stückgut S_{d} und ist dadurch in ihrer Bewegung blockiert.

Die Abdeckplatte 11b, das Fahrwerk 11c und der Faltenbalg 11d stellen Fahrwagenbauteile 11 eines Kippschalensorters 10b dar, auf die häufig deplatziertes Stückgut S_{d} gelangt. Erfindungsgemäß befindet sich auf dem vertikalen Niveau z_{F} dieser Fahrwagenbauteile 11 die ortsfest neben der Förderbahn 30 stehende Abblasevorrichtung 20, dessen Luftaustrittsöffnungen 21 einen Luftstrom emittieren, der im Einwirkungsbereich liegendes deplatziertes Stückgut S_{d} abbläst.

In der Fig. 4 ist eine Situation verdeutlicht, in welcher ein auf der Abdeckplatte 11b des Kippschalensorters 10b befindliches, deplatziertes Stückgut S_{d} von der auf der ersten Seite 32 der Förderbahn 30 angeordneten Abblasevorrichtung 20 angeblasen, aufgrund seines Wirkkontaktes mit dem Kippschalenarm 18 jedoch nicht entfernt wird. In Transportrichtung x hinter der Abblasevorrichtung 20 steht auf der zweiten Seite 33 ortsfest eine zweite Abblasevorrichtung 27, welche etwaig auf der Abdeckplatte 11b verbliebendes, deplatziertes Stückgut S_{d} anbläst und dadurch in Richtung der ersten Seite 32 bewegt. Zur Aufnahme dieses deplatzierten Stückgutes S_{d} ist auf der ersten Seite 32 ebenfalls ein zweiter Sammeltisch 28 aufgestellt. Die zweite Abblasevorrichtung 27 und der zweite Sammeltisch 28 sind baugleich zu der Abblasevorrichtung 20 und dem Sammeltisch 22 ausgeführt.

### Bezugszeichenliste

- 10: Querfördersorter
- 10a: Quergurtsorter
- 10b: Kippschalensorter
- 11: Fahrwagenbauteil
- 11a: Abdeckschürze
- 11b: Abdeckplatte
- 11c: Fahrwerk
- 11d: Faltenbalg
- 12: Fahrwagen
- 13: Querfördereinrichtung
- 14: Umlenkrolle
- 15: Fördergurt
- 16: Räder Fahrwagen
- 17: Kippschale
- 18: Kippschalenarm

- 20: Abräumvorrichtung, Abblasevorrichtung
- 21: Luftaustrittsöffnung
- 22: Sammeltisch
- 23: Gebläse, Kompressor
- 24: Sensoreinheit
- 25: Stückgutsensor
- 26: Fahrwagensensor
- 27: zweite Abblasevorrichtung
- 28: zweiter Sammeltisch

- 30: Förderbahn
- 31: Entladestelle
- 32: erste Seite Förderbahn
- 33: zweite Seite Förderbahn

- d: Abstand Fahrwagen
- Sₚ: platziertes Stückgut
- S_{d}: deplatziertes Stückgut
- x: Transportrichtung
- y: Ausschleuserichtung
- z_{F}: Niveau Fahrwagenbauteil

## Patentansprüche

1. Querfördersorter (10), wobei der Querfördersorter (10) eine Vielzahl auf einer endlosen Förderbahn (30) miteinander verbundener Fahrwagen (12) aufweist, die mit einer quer zur Transportrichtung (x) ausgerichteten Querfördereinrichtung (13) versehen sind, auf denen ein Stückgut (Sₚ) transportierbar und an festgelegten Entladestellen (31) entladbar ist,
**dadurch gekennzeichnet,**
**dass** der Querfördersorter eine Abräumvorrichtung zum Entfernen von deplatziertem Stückgut (S_{d}) aufweist, wobei die Abräumvorrichtung (20) eine auf einer ersten Seite (32) neben der Förderbahn (30) ortsfest angeordnete Abblasevorrichtung (20) ist.

2. Querfördersorter (10) nach Anspruch 1, **dadurch gekennzeichnet, dass** das deplatzierte Stückgut auf einem Fahrwagenbauteil (11) des Fahrwagens (12) abgelegt ist und die Abblasevorrichtung (20) mindestens eine auf oder über einem vertikalen Niveau (z_{F}) des Fahrwagenbauteils (11) ortsfest angeordnete Luftaustrittsöffnung (21) aufweist.

3. Querfördersorter (10) nach Anspruch 2, **dadurch gekennzeichnet, dass** der Querfördersorter ein Quergurtsorter (10a) ist, dessen Fahrwagenbauteil (11) eine Abdeckschürze (11a) ist, die einen Abstand (d) zwischen benachbarten Fahrwagen (12) überspannt.

4. Querfördersorter (10) nach Anspruch 2, **dadurch gekennzeichnet, dass** der Querfördersorter (10) ein Kippschalensorter (10b) ist.

5. Querfördersorter nach Anspruch 4, **dadurch gekennzeichnet, dass** das Fahrwagenbauteil (11) des Kippschalensorters (10b) eine Abdeckplatte (11b) ist, die unter einer beweglich gelagerten Kippschale (17) angeordnet ist, und/oder ein Fahrwerk (11c) des jeweiligen Fahrwagens (12) und/oder ein Faltenbalg (11d), der einen Abstand (d) zwischen benachbarten Fahrwagen (12) überspannt.

6. Querfördersorter (10) nach einem der Ansprüche 2 bis 5, **dadurch gekennzeichnet, dass** die mindestens eine Luftaustrittsöffnung (21) derart angeordnet ist, dass daraus abgegebene Luft über das Fahrwagenbauteil (11) strömt.

7. Querfördersorter (10) nach einem der Ansprüche 2 bis 6, **dadurch gekennzeichnet, dass** mehrere Luftaustrittsöffnungen (21) in Transportrichtung (x) hintereinander angeordnet sind.

8. Querfördersorter (10) nach Anspruch 7, **dadurch gekennzeichnet, dass** die mehreren Luftaustrittsöffnungen (21) gleichzeitig aktiviert sind.

9. Querfördersorter (10) nach Anspruch 7, **dadurch gekennzeichnet, dass** in Transportrichtung (x) nacheinander eine einzelne der mehreren Luftaustrittsöffnungen (21) aktiviert ist.

10. Querfördersorter (10) nach Anspruch 9, **dadurch gekennzeichnet, dass** ein Aktivieren der jeweiligen einzelnen Luftaustrittsöffnung (21) von einer Fördergeschwindigkeit des Querfördersorters (10) in Transportrichtung (x) abhängig ist.

11. Querförderersorter (10) nach einem der Ansprüche 1 bis 10, **dadurch gekennzeichnet, dass** auf einer der ersten Seite (32) gegenüberliegenden, zweiten Seite (33) neben der Förderbahn (30) ein Sammeltisch (22) angeordnet ist.

12. Querfördersorter (10) nach Anspruch 11, **dadurch gekennzeichnet, dass** der Sammeltisch (22) auf oder unter einem vertikalen Niveau (z_{F}) des Fahrwagenbauteils (11) angeordnet ist.

13. Querfördersorter nach einem der Ansprüche 1 bis 12, **dadurch gekennzeichnet, dass** auf einer der ersten Seite (32) gegenüberliegenden, zweiten Seite (33) neben der Förderbahn (30) eine zweite Abblasevorrichtung (27) angeordnet ist.

14. Querfördersorter (10) nach Anspruch 1 und/oder 13, **dadurch gekennzeichnet, dass** die Abblasevorrichtung(en) (20, 27) an ein Gebläse (23) oder an einen Kompressor (23) angeschlossen ist/sind.

15. Querfördersorter (10) nach einem der Ansprüche 1 bis 14, **dadurch gekennzeichnet, dass** in Transportrichtung (x) vor der Abblasevorrichtung (20, 27) eine Sensoreinheit (24) derart angeordnet ist, dass diese den Abstand (d) zwischen den benachbarten Fahrwagen (12) und ein auf dem Fahrwagenbauteil (11) befindliches, deplatziertes Stückgut (S_{d}) identifiziert.

16. Querfördersorter (10) nach einem der Ansprüche 1 bis 15, **dadurch gekennzeichnet, dass** die Abblasevorrichtung (20, 27) in Transportrichtung (x) hinter den Entladestellen (31) angeordnet ist.

## Claims

1. A cross-conveyor sorter (10), wherein the cross-conveyor sorter (10) comprises a plurality of carriages (12) which are connected to one another on an endless conveying track (30), the carriages (12) are provided with a cross-conveyor device (13), which is oriented transversely to the transportation direction (x) and on which items (Sₚ) can be transported and unloaded at predetermined unloading locations (31),
**characterized in that**
the cross-conveyor sorter (10) comprises a clearing apparatus (20) for removing misplaced items (S_{d}), wherein the clearing apparatus (20) is a blow-off device (20) which is arranged stationary on a first side (32) alongside the conveying track (30).

2. The cross-conveyor sorter (10) according to claim 1, **characterized in that** the misplaced item (Sₚ) is deposited on a carriage component (11) of the carriage (12) and the blow-off device (20) has at least one stationary air outlet opening (21) located on or above a vertical level (z_{F}) of the carriage component (11).

3. The cross-conveyor sorter (10) according to claim 2, **characterized in that** the cross-conveyor sorter (10) is a cross-belt sorter (10a) and the carriage component (11) of which is a cover apron (11a) which spans a distance (d) between adjacent carriages (12).

4. The cross-conveyor sorter (10) according to claim 2, **characterized in that** the cross-conveyor sorter (10) is a tilt-tray sorter (10b).

5. The cross-conveyor sorter (10) according to claim 4, **characterized in that** the carriage component (11) of the tilt-tray sorter (10b) is a cover plate (11b) which is arranged under a movably mounted tilt-tray (17) and/or a chassis (11c) of the respective carriage (12) and/or a gaiter (11d) which spans a distance (d) between adjacent carriages (12).

6. The cross-conveyor sorter (10) according to one of claims 2 to 5, **characterized in that** the at least one air outlet opening (21) is arranged in such a manner that air discharged therefrom flows over the carriage component (11).

7. The cross-conveyor sorter (10) according to one of claims 2 to 6, **characterized in that** a plurality of air outlet openings (21) are arranged one behind the other in the transport direction (x).

8. The cross-conveyor sorter (10) according to claim 7, **characterized in that** the plurality of air outlet openings (21) are activated simultaneously.

9. The cross-conveyor sorter (10) according to claim 7, **characterized in that** a single one of the plurality of air outlet openings (21) is activated one after the other in the transport direction (x).

10. The cross-conveyor sorter (10) according to claim 9, **characterized in that** activation of the respective single air outlet opening (21) is dependent on a conveying speed of the cross-conveyor sorter (10) in the transport direction (x).

11. The cross-conveyor sorter (10) according to one of claims 1 to 10, **characterized in that** a collection table (22) is arranged next to the conveying track (30) on a second side (33) which is oppositely to the first side (32).

12. The cross-conveyor sorter (10) according to claim 11, **characterized in that** the collection table (22) is arranged on or below a vertical level (z_{F}) of the carriage component (11).

13. The cross-conveyor sorter (10) according to one of claims 1 to 12, **characterized in that** a second blow-off device (27) is arranged next to the conveying track (30) on a second side (33) oppositely to the first side (32).

14. The cross-conveyor sorter (10) according to claim 1 and/or 13, **characterized in that** the blow-off device(s) (20, 27) is/are connected to a blower (23) or to a compressor (23).

15. The cross-conveyor sorter (10) according to one of claims 1 to 14, **characterized in that** in the transport direction (x) prior to the blow-off device (20, 27), a sensor unit (24) is arranged in such a manner that it identifies the distance (d) between the adjacent carriages (12) and a misplaced item (S_{d}) located on the carriage component (11).

16. The cross-conveyor sorter (10) according to one of claims 1 to 15, **characterized in that** the blow-off device (20, 27) is arranged in the transport direction (x) beyond the unloading locations (31).

## Revendications

1. Trieur transversal (10), dans lequel le trieur transversal (10) présente une pluralité de chariots (12) reliés entre eux sur une voie de convoyeur sans fin (30), qui sont équipés d'un dispositif de trieur transversal (13) orienté transversalement à la direction de transport (x), sur lequel une charge unitaire (Sₚ) peut être transportée et déchargée à des points de déchargement spécifiés (31),
**caractérisé en ce**
**que** le trieur transversal présente un dispositif d'enlèvement pour éloigner des marchandises mal positionnées (S_{d}), dans lequel le dispositif d'enlèvement (20) est un dispositif de soufflage (20) disposé de manière fixe sur un premier côté (32) à côté de la voie de convoyeur (30).

2. Trieur transversal (10) selon la revendication 1, **caractérisé en ce que** les marchandises mal positionnées sont placées sur un élément de chariot (11) du chariot (12) et que le dispositif de soufflage (20) présente au moins une ouverture de sortie d'air (21) disposée de manière fixe sur ou au-dessus d'un niveau vertical (z_{F}) de l'élément de chariot (11).

3. Trieur transversal (10) selon la revendication 2, **caractérisé en ce que** le trieur transversal est un trieur à bande transversale (10a) dont le composant de chariot (11) est un tablier de recouvrement (11a) qui couvre une distance (d) entre les chariots adjacents (12).

4. Trieur transversal (10) selon la revendication 2, **caractérisé en ce que** le trieur transversal (10) est un trieur à plateau basculant (10b).

5. Trieur transversal selon la revendication 4, **caractérisé en ce que** le composant de chariot (11) du trieur à plateau basculant (10b) est une plaque de recouvrement (11b) disposée sous un plateau basculant monté de manière mobile (17), et/ou un châssis (11c) du chariot respectif (12) et/ou un soufflet (11d) couvrant une distance (d) entre les chariots adjacents (12).

6. Trieur transversal (10) selon l'une des revendications 2 à 5, **caractérisé en ce que** l'au moins une ouverture de sortie d'air (21) est disposée de sorte que l'air libéré par celle-ci s'écoule sur le composant de chariot (11).

7. Trieur transversal (10) selon l'une des revendications 2 à 6, **caractérisé en ce que** plusieurs ouvertures de sortie d'air (21) sont disposées l'une derrière l'autre dans la direction de transport (x).

8. Trieur transversal (10) selon la revendication 7, **caractérisé en ce que** les multiples ouvertures de sortie d'air (21) sont activées simultanément.

9. Trieur transversal (10) selon la revendication 7, **caractérisé en ce que,** dans la direction de transport (x), l'une des nombreuses ouvertures de sortie d'air (21) est activée successivement.

10. Trieur transversal (10) selon la revendication 9, **caractérisé en ce qu'**une activation de l'ouverture de sortie d'air individuelle respective (21) dépend d'une vitesse de convoyage du trieur transversal (10) dans la direction de transport (x).

11. Trieur transversal (10) selon l'une des revendications 1 à 10, **caractérisé en ce qu'**une table de collecte (22) est disposée sur un second côté (33) opposé au premier côté (32) à côté de la voie de convoyeur (30).

12. Trieur transversal (10) selon la revendication 11, **caractérisé en ce que** la table de collecte (22) est disposée sur ou en dessous d'un niveau vertical (z_{F}) du composant de chariot (11).

13. Trieur transversal selon l'une des revendications 1 à 12, **caractérisé en ce qu'**un second dispositif de soufflage (27) est disposé sur un second côté (33) opposé au premier côté (32) à côté de la voie de convoyeur (30).

14. Trieur transversal (10) selon la revendication 1 et/ou 13, **caractérisé en ce que** le ou les dispositifs de soufflage (20, 27) sont raccordés à un souffleur (23) ou à un compresseur (23).

15. Trieur transversal (10) selon l'une des revendications 1 à 14, **caractérisé en ce qu'**une unité de capteur (24) est disposée dans la direction de transport (x) devant le dispositif de soufflage (20, 27) de manière à ce que celle-ci identifie la distance (d) entre les chariots adjacents (12) et un élément mal placé (S_{d}) situé sur le composant de chariot (11).

16. Trieur transversal (10) selon l'une des revendications 1 à 15, **caractérisé en ce que** le dispositif de soufflage (20, 27) est disposé dans la direction de transport (x) derrière les points de déchargement (31).
